# EUROPÄISCHE PATENTSCHRIFT

(11) **EP 0 882 191 B1**
(45) Veröffentlichungstag und Bekanntmachung des Hinweises auf die Patenterteilung: **02.05.2003**
(21) Anmeldenummer: 97903268.7
(22) Anmeldetag: 13.02.1997
(51) Int. Cl.: F16J 15/08

(54) **ZYLINDERKOPFDICHTUNG MIT EINER MEHRERE METALLBLECHLAGEN AUFWEISENDEN DICHTUNGSPLATTE**
CYLINDER HEAD GASKET WITH A GASKET PLATE HAVING SEVERAL SHEET-METAL LAYERS
JOINT DE CULASSE AVEC PLAQUE D'ETANCHEITE PRESENTANT PLUSIEURS COUCHES DE TOLES

(30) Priorität: 21.02.1996 DE 19606382
(43) Veröffentlichungstag der Anmeldung: 09.12.1998
(73) Patentinhaber: ElringKlinger AG, 72581 Dettingen (DE)
(72) Erfinder: BUCK, Reinhold, D-72584 Hülben (DE); BLEYH, Fritz, D-72581 Dettingen (DE)
(74) Vertreter: Hoeger, Stellrecht & Partner
(86) Internationale Anmeldenummer: EP9700662
(87) Internationale Veröffentlichungsnummer: WO97031204

(56) Entgegenhaltungen:
- EP-A- 0 486 817
- EP-A- 0 533 357
- EP-A- 0 544 215
- JP-A- 7 253 162

## Beschreibung

Die Erfindung betrifft eine Zylinderkopfdichtung mit einer mehrere Metallblechlagen aufweisenden Dichtungsplatte, welche mindestens eine Brennraum-Durchgangsöffnung besitzt, wobei eine erste äußere Metallblechlage mit einem ringförmigen, die Brennraum-Durchgangsöffnung umfassenden, in Richtung auf eine benachbarte, zweite Metallblechlage vorspringenden und gegen letztere anliegenden, senkrecht zur Dichtungsplatte elastisch verformbaren, insbesondere als Sicke ausgebildeten Dichtelement versehen ist, und wobei zur Begrenzung der Verformung des Dichtelements dem letzteren radial benachbart auf einer der beiden Lagen ein der anderen Lage zugewandter und die Brennraum-Durchgangsöffnung umfassender metallischer Distanzhalterring durch Laserschweißen befestigt ist, welcher von den beiden Lagen überdeckt wird und dessen senkrecht zur Dichtungsplatte gemessene Dicke nur einen Bruchteil der Dicke einer jeden der beiden Lagen beträgt.

Die verschiedenen metallischen Lagen mehrlagiger metallischer Dichtungsplatten von Zylinderkopfdichtungen wurden bislang meist durch Elektropunktschweißen miteinander verbunden. Dabei besteht aber hinsichtlich der Zuverlässigkeit der Verbindung ein erhebliches Problem: Dem aus den verschiedenen metallischen Lagen bestehenden Laminat ist nach dem Schweißen nicht anzusehen, ob die verschiedenen Lagen auch tatsächlich durchgeschweißt und infolgedessen fest miteinander verbunden wurden. Elektrodenabdrücke an den Sichtseiten der außenliegenden Lagen ergeben sich nämlich schon allein durch die hohen Anpreßkräfte der Elektroden, und selbst wenn zwischen den letzteren ein hinreichender Schweißstrom geflossen ist, besagt dies noch nicht, daß dieser längs einer gedachten geraden Verbindungslinie zwischen den beiden Elektroden geflossen ist - wenn an dieser Stelle zwei metallische Lagen nicht kontaktgebend gegeneinander anliegen, sondern an einer anderen Stelle, fließt der Strom längs der metallischen Lagen zu dieser anderen Stelle, so daß sich unter Umständen eine Verschweißung an einer durchaus unerwünschten Stelle ergibt.

Aus der EP-0 486 817-B1 ergibt sich eine Zylinderkopfdichtung mit einer von einer Metallblechlage gebildeten Dichtungsplatte und einem auf dieser Metallblechlage durch Laser-Punktschweißen befestigten Metallblech-Dichtring, der eine Brennraum-Durchgangsöffnung der Metallblechlage unmittelbar umgibt sowie der Begrenzung der elastischen Verformung einer Sicke (insbesondere beim Anziehen der Zylinderkopfschrauben) dient, welche in der die Dichtungsplatte bildenden Metallblechlage ausgebildet ist, die Brennraum-Durchgangsöffnung und den Dichtring ringförmig umschließt sowie eine Höhe hat, welche etwas größer ist als die Dicke des Dichtrings. Die der Befestigung des Dichtrings an der die Dichtungsplatte bildenden Metallage dienenden Schweißpunkte sind dabei so ausgebildet und angeordnet, daß ihr Durchmesser etwas größer ist als ihr in Umfangsrichtung des Dichtrings gemessener Mittenabstand, so daß sich einander benachbarte Schweißpunkte überlappen. Der Laserstrahl wird dabei auf die obere Seite, d. h. die Sichtseite des Dichtrings gerichtet, so daß die gegen den Zylinderkopf (oder gegebenenfalls gegen den Motorblock) anliegende Ringfläche des Dichtrings eine schuppenartige Oberflächenstruktur aufweist, welche, wenn sie gegen eine ebene, glatte Fläche des Zylinderkopfs oder Motorblocks angepreßt wird, eine gasdichte Abdichtung nicht gewährleisten kann.

Es hat sich ferner gezeigt, daß auch bei einer gemäß der EP-0 486 817-B1 hergestellten Zylinderkopfdichtung die Prozeßsicherheit des Laser-Punktschweißens nicht ohne weiteres gewährleistet ist und daß eine optische Prüfung der Laserschweißpunkte keinen sicheren Rückschluß auf eine feste Verbindung zwischen dem Dichtring und der die Dichtungsplatte bildenden Metallblechlage zuläßt. Löst sich aber aufgrund der Motordynamik während des Motorbetriebs ein einer Brennraum-Durchgangsöffnung benachbartes Element der Zylinderkopfdichtung von der Dichtungsplatte ab und gelangt in den Brennraum, so kann dies zu einer sofortigen Zerstörung des Motors führen.

Was für die EP-A-0 486 817 gilt, gilt aber ebenso für die EP-B-0 468 526, deren Fig. 2 eine gesickte Dichtungsplatte zeigt, auf der ein eine Brennraum-Durchgangsöffnung umfassender Dicht- oder Distanzhalterring durch Laserschweißen befestigt ist: Nach Sp. 7, Zeilen 13 und 14 der EP-B-0 468 526 wird mit einem gepulsten Laser gearbeitet, so daß die Struktur der Laserschweißung notwendigerweise von derselben Natur ist wie diejenige der sich aus der EP-A-0 486 817 ergebenden Laserschweißnaht.

Schließlich offenbart die US-A-5 568 932 eine Zylinderkopfdichtung mit den Merkmalen des Oberbegriffs des Anspruchs 1, wobei der metallische Distanzhalterring eine Dicke von 0,01 bis 0,1 mm haben soll und durch Laserschweißen an einer mittleren Metallblechlage der mehrlagigen Dichtung befestigt ist. Die beiden äußeren Lagen sollen eine Dicke von 0,2 bis 0,25 mm haben, die mittlere Lage eine Dicke von 0,1 bis 0,15 mm. Da in der US-A-5 568 932 stets nur vom "Laserschweißen" die Rede ist und, wie sich aus dem Vorstehenden ergibt, bislang beim Laserschweißen stets mit einem gepulsten Laser gearbeitet bzw. punktgeschweißt wurde, ist davon auszugehen, daß dies auch auf die Zylinderkopfdichtung nach der US-A-5 568 932 zutrifft.

Der Erfindung lag nun die Aufgabe zugrunde, bei einer Zylinderkopfdichtung der eingangs erwähnten Art dafür zu sorgen, daß durch eine einfache optische Prüfung eine höhere Sicherheit dahingehend herbeigeführt werden kann, daß der Distanzhalterring dauerhaft fest und dicht mit der ihn tragenden Metallblechlage der Dichtung verbunden wurde.

Diese Aufgabe läßt sich erfindungsgemäß dadurch lösen, daß der Distanzhalterring an der ihn tragenden Lage durch eine kontinuierliche, ringförmige und in sich geschlossene, bis auf einen Überlappungsbereich gleichförmige Laserschweißnaht gasdicht befestigt ist, welchletztere im Überlappungsbereich gedoppelt ist.

Es hat sich nämlich völlig überraschenderweise gezeigt, daß beim Anschweißen eines solchen Distanzhalterrings mittels eines im Dauerstrichbetrieb arbeitenden Lasers, wobei der Laserstrahl von der Seite des Distanzhalterrings her auf die Schweißstelle gerichtet wird, immer dann, wenn an einer Stelle nicht durchgeschweißt wurde, der Distanzhalterring an dieser Stelle an seiner Sichtseite Anlauffarben zeigt, ein Effekt, welcher aus bislang noch nicht verständlichen Gründen beim Laser-Punktschweißen nicht oder zumindest nicht deutlich sichtbar auftritt.

Bei der Herstellung einer erfindungsgemäß gestalteten Zylinderkopfdichtung genügt also eine einfache optische Prüfung des Distanzhalterrings nach Durchführung des Schweißvorgangs, um festzustellen, ob längs der Laserschweißnaht überall durchgeschweißt wurde, d. h. ob der Distanzhalterring überall fest mit der ihn tragenden Metallblechlage verbunden wurde. Abgesehen davon, daß sich dadurch das Herbeiführen einer dauerhaft festen Verbindung zwischen Distanzhalterring und Dichtungsplatte auf einfache Weise überprüfen läßt, ermöglicht es die Erfindung auch, auf einfache Weise zu prüfen, ob der Distanzhalterring längs seines Umfangs überall gasdicht mit der ihn tragenden Metallblechlage verbunden wurde, was dann wichtig ist, wenn die Zylinderkopfdichtung so gestaltet ist, daß der Distanzhalterring auch die Funktion eines die Brennraum-Durchgangsöffnung umgebenden Dichtelements übernimmt.

Beim Laserschweißen von Metallen läßt sich nicht vermeiden, daß vom Werkstück während des Schweißens erzeugte Dämpfe zu Niederschlägen auf der den Laserstrahl in der Schweißstelle fokussierenden Optik führen. Beim Laser-Punktschweißen, d. h. beim Arbeiten mit einem gepulsten Laser, sind die Laserstrahlpulse außerordentlich kurz, und es hat sich gezeigt, daß derartige Niederschläge auf der Laserstrahl-Optik nach einer gewissen Anzahl von Laserstrahlpulsen zu einer derartigen Verminderung der auf dem Werkstück pro Laserschweißpunkt auftreffenden Laserstrahlenergie führen, daß ein Durchschweißen schon aus diesem Grund nicht mehr sichergestellt wäre, würde man die Laserstrahl-Optik nicht reinigen, was natürlich mit einem erheblichen Aufwand verbunden ist. Überraschenderweise lassen sich nun mit einem im Dauerstrichbetrieb arbeitenden Laser sehr viel mehr Distanzhalterringe anschweißen als durch Laserstrahl-Punktschweißen, ehe die Laserstrahl-Optik gereinigt werden muß, ganz abgesehen davon, daß die Schweißzeit je Distanzhalterring beim Dauerstrichschweißen sehr viel kürzer ist als beim Punktschweißen.

Schließlich bringt die Erfindung auch noch den folgenden Vorteil mit sich: Würde man das sich aus der EP-0 486 817-B1 ergebende Schweißprinzip auf die Befestigung des Distanzhalterrings einer Zylinderkopfdichtung der eingangs erwähnten Art übertragen, führte dies erst recht zu dem Risiko, daß sich aufgrund der Motordynamik im Motorbetrieb ein einen Brennraum umgebender Teil der Zylinderkopfdichtung von letzterer ablöst und in den Brennraum fällt: Da im Motorbetrieb die Sicke der äußeren Metallblechlage periodisch elastisch abgeflacht wird und sich dazwischen immer wieder erhöht, führt das Arbeiten der Sicke zwangsläufig zu einer oszillierenden, bezüglich der Brennraumachse radialen Schiebebewegung der äußeren Metallblechlage zwischen Distanzhalterring und dem benachbarten Zylinderkopf (bzw. Motorblock); die sich aufgrund des Laserschweißverfahrens nach der EP-0 486 817-B1 ergebende rauhe Oberseite des Distanzhalterrings führt dann zu dem Risiko, daß ein den Brennraum umgebender ringförmiger Bereich der gegen den Distanzhalterring anliegenden Metallblechlage aufgrund dieser Schiebebewegungen von dieser Metallblechlage abgetrennt wird und in den Brennraum fallen kann.

Die Sicke besitzt vorzugsweise einen kreisbogenförmigen Querschnitt, bei solchen Zylinderkopfdichtungen, bei denen das Dichtelement nähe der Brennraum-Durchgangsöffnung angeordnet ist, kann die äußere Metallblechlage aber auch nur abgekröpft sein und eine sogenannte Halbsicke bilden; grundsätzlich sind jedenfalls auch andere als sickenförmige Dichtelemente denkbar, welche sich beim Anziehen der Zylinderkopfschrauben und im Motorbetrieb senkrecht zur Ebene der Dichtungsplatte elastisch verformen.

Wenn vorstehend davon die Rede war, daß die Laserschweißnaht einen in sich geschlossenen Ring bildet, so soll hierunter auch eine Schweißnaht verstanden werden, bei der in der Draufsicht Anfangs- und Endbereich der Schweißnaht nebeneinander liegen, d. h. daß im Überlappungsbereich Anfangs- und Endbereich nicht zusammenfallen. Des weiteren soll der Hinweis, daß die Laserschweißnaht im Überlappungsbereich "gedoppelt ist", nicht besagen, daß Anfangs- und Endbereich der Schweißnaht mit gleicher Laserstrahlintensität bzw. - energie geschweißt wurden wie die sich nicht überlappenden Schweißnahtbereiche (diesbezüglich wird auf die folgenden Ausführungen verwiesen).

Wird der Laserstrahl durch den Distanzhalterring hindurch auf die Schweißstelle gerichtet, ist die Prozeßdauer in der Praxis unabhängig von der Stärke des für die Herstellung des Distanzhalterrings verwendeten Metallblechs, da die Dicke des Praxis unabhängig von der Stärke des für die Herstellung des Distanzhalterrings verwendeten Metallblechs, da die Dicke des Distanzhalterrings wesentlich geringer ist als die Dicke der den Distanzhalterring tragenden Metallblechlage; bei bevorzugten Ausführungsformen der erfindungsgemäßen Zylinderkopfdichtung beträgt die Dicke des Distanzhalterrings ungefähr 0,1 bis 0,15 mm und diejenige der zweiten Metallblechlage ungefähr 0,6 bis 1,1 mm, vorzugsweise ungefähr 0,85 bis 1,05 mm.

Grundsätzlich wäre es bei einer erfindungsgemäßen Zylinderkopfdichtung möglich, daß das an der äußeren Metallblechlage vorgesehene Dichtelement radial innerhalb des Distanzhalterrings liegt, bevorzugt werden aber Ausführungsformen, bei denen der Distanzhalterring ein an die Brennraum-Durchgangsöffnung unmittelbar angrenzendes Dichtelement bildet.

Das Grundprinzip der vorliegenden Erfindung eignet sich nicht nur für Zylinderkopfdichtungen mit einer den Distanzhalterring tragenden Metallblechlage und einer den Distanzhalterring überdeckenden äußeren Metallblechlage, sondern beispielsweise auch für solche Zylinderkopfdichtungen, bei denen eine innere Metallblechlage zwischen zwei äußeren, mit Dichtelementen versehenen Metallblechlagen angeordnet ist. Damit dann mit einem einzigen Distanzhalterring eine unerwünscht hohe Verformung der Dichtelemente der beiden äußeren Metallblechlagen verhindert werden kann, wird empfohlen, eine solche Zylinderkopfdichtung so auszubilden, daß die innere Metallblechlage dem Distanzhalterring radial benachbart um ein Maß abgekröpft ist, welches kleiner als die Dicke des Distanzhalterrings ist.

Damit sich eine vom Energieeintrag her überall gleichförmige Schweißnaht ergibt, wird vorgeschlagen, ein Verfahren zur Befestigung des Distanzhalterrings einer erfindungsgemäßen Zylinderkopfdichtung so zu gestalten, daß eine einen Laserstrahl eines Dauerstrichlasers auf die Grenzfläche zwischen dem Distanzhalterring und der diesen tragenden Metallblechlage fokussierende Laserstrahl-Optik und der Distanzhalterring samt der ihn tragenden Metallblechlage längs einer der zu erzeugenden Laserschweißnaht entsprechenden Bahn relativ zueinander derart bewegt werden, daß längs eines ersten Teils der Bahn eine Beschleunigung aus dem Stillstand heraus auf eine Endgeschwindigkeit erfolgt, daß ein zweiter Teil der Bahn, welcher um ein Vielfaches größer als der erste Teil ist, mit dieser Endgeschwindigkeit durchlaufen wird, und daß längs eines dritten Teils der Bahn, welcher mit dem ersten Teil zumindest im wesentlichen zusammenfällt, eine Verzögerung bis zum Stillstand erfolgt, wobei die Laserstrahlleistung längs ungefähr des zweiten Teils der Bahn zumindest im wesentlichen auf einer Endleistung konstant gehalten, längs ungefähr des ersten Teils der Bahn zumindest im wesentlichen stetig bis auf diese Endleistung erhöht und längs ungefähr des dritten Teils der Bahn zumindest im wesentlichen stetig vermindert wird. Durch eine solche Steuerung der Laserstrahlleistung läßt sich der Tatsache Rechnung tragen, daß die zu beschleunigenden trägen Massen der Laserschweißmaschine zu Beginn des Schweißvorgangs beschleunigt und am Ende des Schweißvorgangs abgebremst werden müssen, wozu jeweils eine endliche Zeit erforderlich ist, und in diesen Zeiträumen wird durch die beschriebene Steuerung der Laserstrahlleistung dafür gesorgt, daß beim Schweißen mit geringerer Bahngeschwindigkeit das Metall insbesondere des Distanzhalterrings nicht wegschmilzt.

Normalerweise werden Distanzhalterringe von Zylinderkopfdichtungen der eingangs erwähnten Art aus Federstahlblech hergestellt. Es hat sich nun gezeigt, daß beim Anschweißen eines Federstahlblech-Distanzhalterrings dessen radial äußerer Randbereich dazu neigt, sich vom Trägerblech etwas abzuheben. Aus diesem Grund werden bei bevorzugten Ausführungsformen der erfindungsgemäßen Zylinderkopfdichtung die Distanzhalterringe aus einem anderen Stahl als Federstahl hergestellt, weil sich nämlich überraschenderweise gezeigt hat, daß sich die radial äußeren Bereiche derartiger Distanzhalterringe während des Schweißvorgangs an der den Ringen zugewandten Oberfläche des Trägerblechs geradezu "festsaugen", so daß es nach Beendigung des Schweißvorgangs noch nicht einmal mehr gelingt, die äußeren Randbereiche der Distanzhalterringe mit einem Werkzeug vom Trägerblech abzuheben.

Weitere Merkmale, Vorteile und Einzelheiten der Erfindung ergeben sich aus der folgenden Beschreibung einer bevorzugten Ausführungsform der erfindungsgemäßen Zylinderkopfdichtung und ihrer Herstellung, wobei auf die beigefügten Zeichnungen Bezug genommen wird; diese zeigen:
- Fig. 1: eine Draufsicht auf einen Teil der Zylinderkopfdichtung;
- Fig. 2: einen Schnitt durch einen Randbereich dieser Zylinderkopfdichtung entsprechend der Linie 2-2 in Fig. 1;
- Fig. 3: einen Schnitt durch einen zwischen zwei Brennraum-Durchgangsöffnungen liegenden Stegbereich der Zylinderkopfdichtung entsprechend der Linie 3-3 in Fig. 1, und
- Fig. 4: ein Diagramm zur Erläuterung der Relativbewegung zwischen Laserstrahl-Optik und derjenigen Metallblechlage, auf der der Distanzhalterring zu befestigen ist, sowie der Schweißweg- bzw. Zeit-abhängig gesteuerten Laserleistung während des Anschweißens des Distanzhalterrings an dieser Metallblechlage.

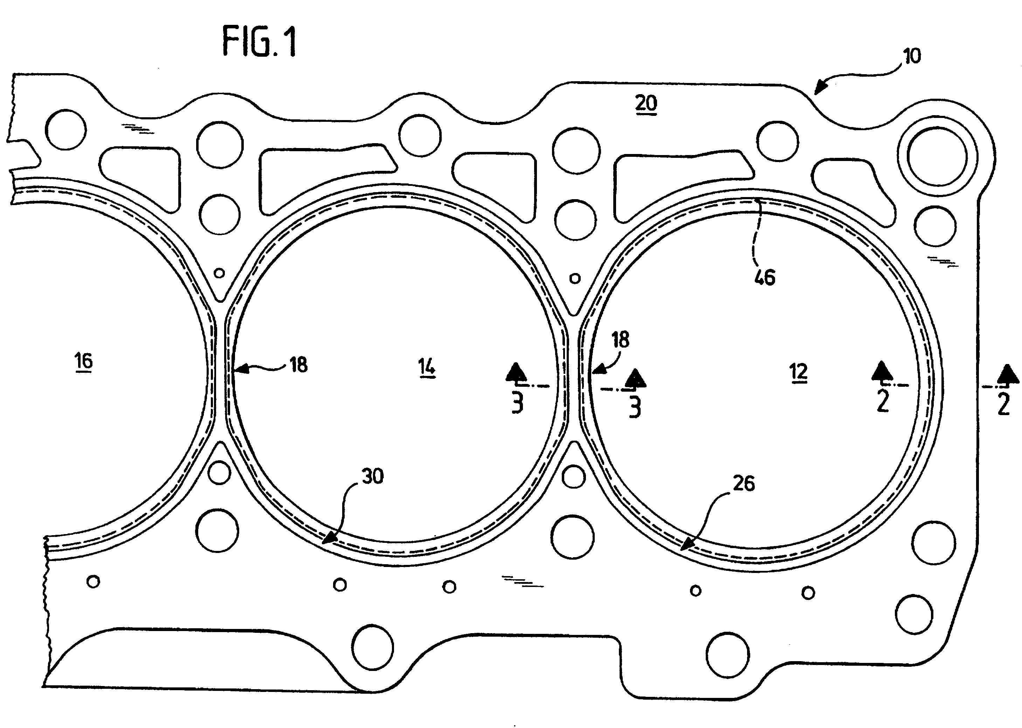

Die in Fig. 1 dargestellte erfindungsgemäße Zylinderkopfdichtung besitzt eine Dichtungsplatte 10, in der sich nebeneinander mehrere Brennraum-Durchgangsöffnungen befinden, von denen nur die Öffnungen 12 und 14 ganz und die benachbarte Öffnung 16 teilweise dargestellt sind. Zwischen einander benachbarten Brennraum-Durchgangsöffnungen bildet die Dichtungsplatte 10 verhältnismäßig schmale Stegbereiche 18. Im übrigen soll die Zylinderkopfdichtung nicht weiter beschrieben werden, da dies für das Verständnis der vorliegenden Erfindung nicht erforderlich ist.

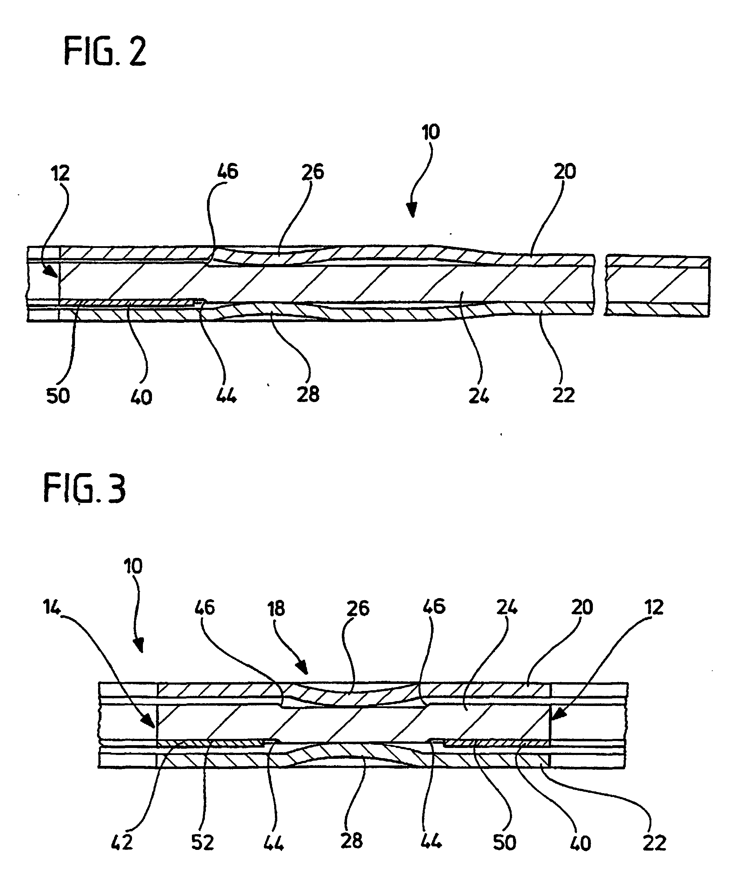

In den Figuren 2 und 3 wurden die Ränder der Brennraum-Durchgangsöffnungen mit den in Fig. 1 für diese Öffnungen verwendeten Bezugszeichen versehen, und da die Fig. 3 einen Schnitt durch den einen Stegbereich 18 darstellt, wurde auch dieses Bezugszeichen in die Fig. 3 eingetragen.

Wie sich aus den Figuren 2 und 3 ergibt, besitzt die gezeichnete Ausführungsform der erfindungsgemäßen Zylinderkopfdichtung eine Dichtungsplatte, welche im wesentlichen aus drei Metallblechlagen besteht, nämlich aus zwei Außenlagen 20 und 22 und einer zwischen den beiden Außenlagen angeordneten Mittellage 24, wobei die Blechstärke der letzteren sehr viel größer ist als diejenige der Außenlagen 20, 22.

Jede der Brennraum-Durchgangsöffnungen der erfindungsgemäßen Zylinderkopfdichtung wird vollständig von Dichtelementen umgeben, welche bei der dargestellten Ausführungsform die Gestalt von Sicken haben, die durch Prägevorgänge in den Außenlagen 20 und 22 erzeugt wurden. Die die Brennraum-Durchgangsöffnung 12 umgebenden Sicken wurden mit 26 und 28 bezeichnet, ihr Querschnitt ist kreisbogenförmig, sie springen in Richtung auf die Mittellage 24 vor und liegen mit ihren Kuppen gegen die Mittellage 24 an, und zwar nicht nur bei in einen Motor eingebauter Zylinderkopfdichtung, sondern schon in der fertigen Zylinderkopfdichtung vor deren Einbau. Die Metallblechlagen 20, 22 und 24 sind an gewissen Stellen der Dichtungsplatte 10 fest miteinander verbunden, so z. B. in dem in Fig. 2 rechts dargestellten Randbereich der Dichtungsplatte.

In die Fig. 1 wurde das Bezugszeichen 26 für die die Brennraum-Durchgangsöffnung 12 umgebende Sicke eingetragen, ebenso das Bezugszeichen 30 für eine in der Außenlage 20 erzeugte und die Brennraum-Durchgangsöffnung 14 umgebende Sicke. Wie nun die Fig. 1 in Verbindung mit der Fig. 3 erkennen läßt, bedingt der schmale Stegbereich 18 zwischen den Durchgangsöffnungen 12 und 14, daß in diesem Stegbereich die Sicken 26 und 30 zusammenfallen, d. h. ineinanderlaufen, und gleiches gilt für die in der Außenlage 22 erzeugten Sicken; deshalb wurden in die Fig. 3 nur die Bezugszeichen 26 und 28 eingetragen, da im Bereich des Schnitts 3-3 in jeder Außenlage nur noch eine einzige Sicke vorhanden ist.

Damit die Sicken ihre Abdichtfunktion erfüllen können, nämlich die Aufgabe, zu verhindern, daß Gase aus den Brennräumen zwischen den Metallblechlagen 20 und 24 bzw. 22 und 24 in radialer Richtung (bezüglich der Brennraumachsen) entweichen können, müssen die Sicken bei angezogenen Zylinderkopfschrauben und im Motorbetrieb nach wie vor in Richtung senkrecht zur Ebene der Dichtungsplatte 10 elastisch nachgeben können und federnd gegen die Mittellage 24 anliegen; dies setzt voraus, daß die Sicken durch senkrecht zur Ebene der Dichtungsplatte 10 orientierte Pressungskräfte nicht völlig flachgedrückt werden können. Um dies zu gewährleisten, wird jede Brennraum-Durchgangsöffnung von einem Distanzhalterring umfaßt, die Durchgangsöffnung 12 von einem Distanzhalterring 40, die Durchgangsöffnung 14 von einem Distanzhalterring 42. Diese Distanzhalterringe werden aus einem Metallblech hergestellt, dessen Dicke erfindungsgemäß nur einen Bruchteil der Dicke derjenigen Metallblechlage beträgt, an der der betreffende Distanzhalterring befestigt ist. Bei der dargestellten Ausführungsform sind die Distanzhalterringe an der Mittellage 24 befestigt, die Blechstärke der Distanzhalterringe beträgt aber vorteilhafterweise auch nur einen Bruchteil der Blechstärke der Außenlage 20 bzw. der Außenlage 22.

Um nun die Verformung sowohl der Sicken der Außenlage 20, als auch der Sicken der Außenlage 22 in der gewünschten Weise zu begrenzen, könnte man um jede Brennraum-Durchgangsöffnung herum auf jeder Seite der Mittellage 24 jeweils einen Distanzhalterring anbringen; um aber für jede Brennraum-Durchgangsöffnung mit einem einzigen Distanzhalterring auszukommen, ist die Mittellage 24 für jede Brennraum-Durchgangsöffnung mit einer die letztere ringförmig umgebenden Abkröpfung versehen, welche auf derjenigen Seite der Mittellage, an der die Distanzhalterringe angebracht sind, eine die betreffende Brennraum-Durchgangsöffnung mit radialem Abstand ringförmig umgebende Stufe 44 bildet, die in Richtung auf die Außenlage 22 vorspringt. Auf der anderen Seite der Mittellage 24 ergibt sich dadurch zu jeder Stufe 44 eine Stufe 46, welche zu einer entsprechenden Vertiefung führt. Wenn nun die Höhe der Stufen 44 geringer ist als die Blechstärke der Distanzhalterringe, verhindern die letzteren, daß die Sicken in der Außenlage 22 völlig flachgedrückt werden können. In analoger Weise verhindern diejenigen Bereiche der Mittellage 24, welche zwischen den Stufen 46 und den benachbarten Brennraum-Durchgangsöffnungen liegen, daß durch die erwähnten Pressungskräfte die Sicken der Außenlage 20 völlig flachgedrückt werden können.

Für den Abdichteffekt der Sicken ist es schließlich von Vorteil, wenn die beiden Seiten der Mittellage 24 und/oder die der letzteren zugewandten Seiten der Außenlagen 20 und 22 mit einem üblichen Dichtungsmaterial beschichtet werden.

In den Figuren 2 und 3 sind nun diejenigen Laserschweißnähte 50 und 52 angedeutet, durch die die Distanzhalterringe 40 und 42 gasdicht mit (nicht beschichteten Bereichen) der Mittellage 24 verbunden wurden. Wie sich aus den vorstehenden Ausführungen ergibt, umgibt die Laserschweißnaht 50 die Brennraum-Durchgangsöffnung 12, die Laserschweißnaht 52 die Brennraum-Durchgangsöffnung 14, und zwar jeweils ungefähr kreisringförmig, wobei jede Laserschweißnaht in einem Umfangsbereich gedoppelt ist (wie dieser Begriff zu verstehen ist, wurde vorstehend bereits dargelegt).

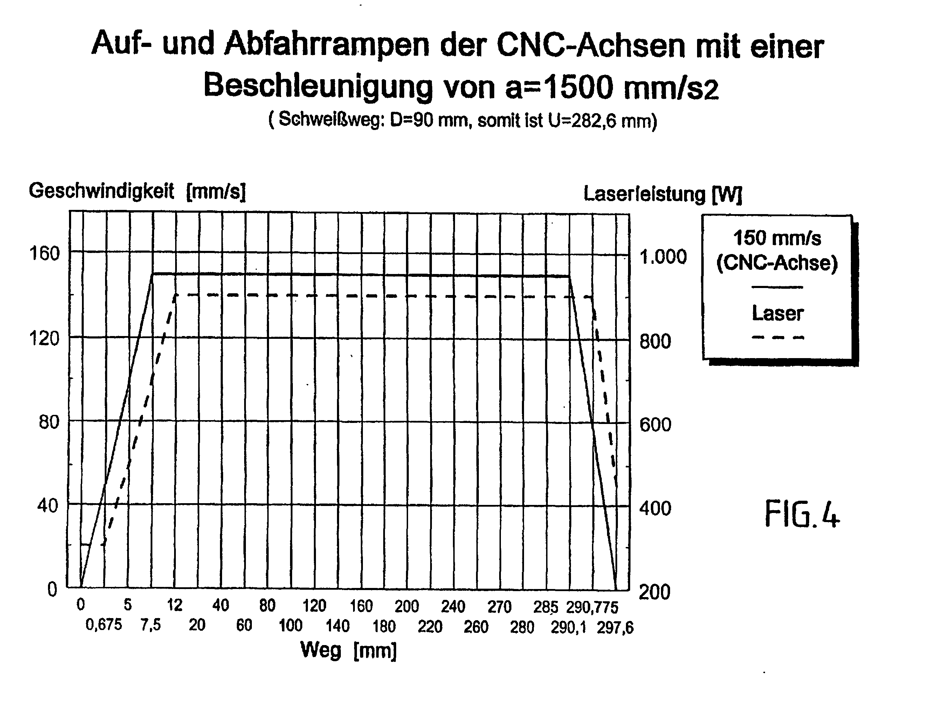

Die Fig. 4 zeigt nun ein Diagramm, zu dem folgendes zu bemerken ist:

Die Laserstrahl-Optik, mit deren Hilfe der Schweißvorgang durchgeführt wird, wird von einem X-Y-Schlitten getragen, welcher sich gegenüber einem Tisch der Laserschweißmaschine, welcher die Mittellage 24 trägt, mittels zweier CNC-Antriebsachsen in zwei zueinander senkrechten Richtungen, und zwar parallel zu dem genannten Tisch, programmgemäß verfahren läßt, um so mit der Laserstrahl-Optik einen Kreisring durchlaufen zu können, welcher der herzustellenden Schweißnaht entspricht. Wie sich aus der Fig. 4 ergibt, erlauben die beiden CNC-Antriebsachsen das Durchlaufen der von der Laserstrahl-Optik zurückzulegenden Bahn mit einer längs dieser Bahn gemessenen maximalen Bahngeschwindigkeit von 150 mm/s sowie eine Beschleunigung bzw. Verzögerung von 1500 mm/s².

In dem in Fig. 4 dargestellten Diagramm stellt die durchgezogene Linie die Bahngeschwindigkeit der Laserstrahl-Optik längs des zurückgelegten Wegs dar, die gestrichelte Linie die Laserleistung längs des zurückgelegten Wegs.

Mit dem erfindungsgemäßen Verfahren lassen sich alle Metallbleche schweißen mit Ausnahme von Kupfer, Aluminium und Aluminium-platiertem Blech.

Für die Mittellage wird folgendes Material besonders empfohlen: ST2 K50 BK GK, DIN 1624/1544 1.0330 in Dicken zwischen 0,6 mm und 1,1 mm.

Für die Distanzhalterringe werden folgende Materialien besonders empfohlen: ST4 LG BK, DIN 1624/1544 1.0338 mit einer Dicke von ungefähr 0,1 mm oder X5 Cr Ni 189 m KG, DIN 17440/59381 1.4301.

Bei der dargestellten bevorzugten Ausführungsform beträgt die Blechstärke der Mittellage 24 1,05 mm, die Blechstärke jeder der beiden Außenlagen 20 bzw. 22 0,25 mm und die Blechstärke der Distanzhalterringe 40 bzw. 42 0,10 mm. Die Kuppen der Sicken 26 und 28 springen im unverformten Zustand der Sicken jeweils um ca. 0,18 mm über die der Mittellage 24 zugewandte Seite der betreffenden Außenlage vor, und die Höhe der Stufen 44, 46 ist ungefähr gleich der halben Blechstärke der Distanzhalterringe 40, 42.

## Patentansprüche

1. Zylinderkopfdichtung mit einer mehrere Metallblechlagen (20, 24, 22) aufweisenden Dichtungsplatte (10), welche mindestens eine Brennraum-Durchgangsöffnung (12) besitzt, wobei eine erste äußere Metallblechlage (22) mit einem ringförmigen, die Brennraum-Durchgangsöffnung umfassenden, in Richtung auf eine benachbarte, zweite Metallblechlage (24) vorspringenden und gegen letztere anliegenden, senkrecht zur Dichtungsplatte (10) elastisch verformbaren, insbesondere als Sicke ausgebildeten Dichtelement (28) versehen ist, und wobei zur Begrenzung der Verformung des Dichtelements (28) dem letzteren radial benachbart auf einer der beiden Lagen (22, 24) ein der anderen Lage zugewandter und die Brennraum-Durchgangsöffnung (12) umfassender metallischer Distanzhalterring (40) durch Laserschweißen befestigt ist, welcher von den beiden Lagen (22, 24) überdeckt wird und dessen senkrecht zur Dichtungsplatte (10) gemessene Dicke nur einen Bruchteil der Dicke jeder der beiden Lagen (22, 24) beträgt, **dadurch gekennzeichnet, daß** der Distanzhalterring (40) an der ihn tragenden Lage (24) durch eine kontinuierliche, ringförmige und in sich geschlossene, bis auf einen Überlappungsbereich gleichförmige Laserschweißnaht (50) gasdicht befestigt ist, welche im Überlappungsbereich gedoppelt ist.

2. Zylinderkopfdichtung nach Anspruch 1, **dadurch gekennzeichnet, daß** die Schweißnaht (50) so strukturiert ist, wie sie sich durch einen über den Distanzhalterring (40) auf die Schweißstelle gerichteten Laserstrahl ergibt.

3. Zylinderkopfdichtung nach Anspruch 1 oder 2, **dadurch gekennzeichnet, daß** die Dicke des Distanzhalterrings (40) ungefähr 0,1 bis 0,15 mm und diejenige der zweiten Lage (24) ungefähr 0,6 bis 1,1 mm, vorzugsweise ungefähr 0,85 bis 1,05 mm, beträgt.

4. Zylinderkopfdichtung nach einem oder mehreren der Ansprüche 1 bis 3, **dadurch gekennzeichnet, daß** der Distanzhalterring (40) ein weiteres, an die Brennraum-Durchgangsöffnung (12) unmittelbar angrenzendes Dichtelement bildet.

5. Zylinderkopfdichtung nach einem oder mehreren der vorstehenden Ansprüche, **dadurch gekennzeichnet, daß** eine weitere äußere Metallblechlage (20) vorgesehen ist, zwischen welcher und der ersten Lage (22) die zweite Lage (24) angeordnet ist, daß letztere dem Distanzhalterring (40) radial benachbart um ein Maß abgekröpft ist, welches kleiner als die Dicke des Distanzhalterrings ist, und daß auch die weitere äußere Lage (20) mit einem dem Dichtelement (28) der ersten Lage (22) entsprechenden Dichtelement (26) versehen ist.

6. Verfahren zur Befestigung des Distanzhalterrings einer Zylinderkopfdichtung nach einem oder mehreren der Ansprüche 1 bis 5, **dadurch gekennzeichnet, daß** eine einen Laserstrahl eines Dauerstrichlasers auf die Grenzfläche zwischen dem Distanzhalterring (40) und der diesen tragenden Lage (24) fokussierende Laserstrahl-Optik sowie der Distanzhalterring samt dieser Lage längs einer der zu erzeugenden Laserschweißnaht entsprechenden Bahn relativ zueinander derart bewegt werden, daß längs eines ersten Teils der Bahn eine Beschleunigung aus dem Stillstand heraus auf eine Endgeschwindigkeit erfolgt, daß ein zweiter Teil der Bahn, welcher um ein Vielfaches größer als der erste Teil ist, mit dieser Endgeschwindigkeit durchlaufen wird, und daß längs eines dritten Teils der Bahn, welcher mit dem ersten Teil zumindest im wesentlichen zusammenfällt, eine Verzögerung bis zum Stillstand erfolgt, wobei die Laserstrahlleistung längs ungefähr des zweiten Teils der Bahn zumindest im wesentlichen auf einer Endleistung konstant gehalten, längs ungefähr des ersten-Teils der Bahn zumindest im wesentlichen stetig bis auf die Endleistung erhöht und längs ungefähr des dritten Teils der Bahn zumindest im wesentlichen stetig vermindert wird.

7. Verfahren nach Anspruch 6, **dadurch gekennzeichnet, daß** der Laserstrahl durch den Distanzhalterring (40) auf die Grenzfläche gerichtet wird.

## Claims

1. Cylinder head gasket with a gasket plate (10) having several sheet-metal layers (20, 24, 22) and at least one combustion chamber aperture (12), wherein a first outer sheet-metal layer (22) is provided with an annular sealing element (28) surrounding the combustion chamber aperture, projecting in the direction towards an adjacent, second sheet-metal layer (24) and abutting against the latter, the sealing element being elastically deformable perpendicularly to the gasket plate (10) and, in particular, being in the form of a bead, and wherein to limit the deformation of the sealing element (28) a metal spacer ring (40) is attached by laser welding to one of the two layers (22, 24) radially adjacent to the sealing element, the spacer ring facing the other layer, surrounding the combustion chamber aperture (12) and being covered by the two layers (22, 24) and its thickness measured at right angles to the gasket plate (10) being only a fraction of the thickness of each of the two layers (22, 24), **characterized in that** the spacer ring (40) is attached with a gas-tight connection to the layer (24) supporting it by a continuous, annular laser welded seam (50) which is closed upon itself and uniform except for an area of overlap and is doubled in the area of overlap.

2. Cylinder head gasket as defined in claim 1, **characterized in that** the welded seam (50) has a structure obtained by a laser beam directed through the spacer ring (40) onto the welding location.

3. Cylinder head gasket as defined in claim 1 or 2, **characterized in that** the thickness of the spacer ring (40) is approximately 0.1 to 0.15 mm and that of the second layer (24) approximately 0.6 to 1.1 mm, preferably approximately 0.85 to 1.05 mm.

4. Cylinder head gasket as defined in any one or several of claims 1 to 3, **characterized in that** the spacer ring (40) forms a further sealing element directly adjacent the combustion chamber aperture (12).

5. Cylinder head gasket as defined in any one or several of the preceding claims, **characterized in that** a further outer sheet-metal layer (20) is provided, between which layer and the first layer (22) the second layer (24) is arranged, that the latter is offset radially adjacent to the spacer ring (40) to an extent that is less than the thickness of the spacer ring, and that the further outer layer (20) is also provided with a sealing element (26) corresponding to the sealing element (28) of the first layer (22).

6. Process for the attachment of the spacer ring of a cylinder head gasket as defined in any one or several of claims 1 to 5, **characterized in that** a laser beam optical system focusing a laser beam of a continuous-wave laser onto the interface between the spacer ring (40) and the layer (24) supporting the latter as well as the spacer ring together with this layer are moved relative to one another along a path corresponding to the laser welded seam to be generated such that an acceleration takes place from a standstill to a final speed along a first section of the path, that a second section of the path many times larger than the first section is travelled along at this final speed, and that a deceleration up to a standstill takes place along a third section of the path coinciding at least substantially with the first section, the power of the laser beam being kept at least substantially constant at a final power along approximately the second section of the path, being increased at least substantially steadily up to the final power along approximately the first section of the path and being reduced at least substantially steadily along approximately the third section of the path.

7. Process as defined in claim 6, **characterized in that** the laser beam is directed onto the interface through the spacer ring (40).

## Revendications

1. Joint de culasse avec une plaque d'étanchéité (10) présentant une ou plusieurs couches de tôle métallique (20, 24, 22) et possédant au moins un orifice de passage de chambre de combustion (12), une première couche de tôle métallique (22) extérieure étant pourvue d'un élément d'étanchéité (28) annulaire, réalisé en particulier sous forme de moulure, faisant saillie en direction d'une deuxième couche de tôle métallique (24) voisine et en appui contre cette dernière, déformable élastiquement perpendiculairement à la plaque d'étanchéité (10), et pour limiter la déformation de l'élément d'étanchéité (28), au voisinage radial de ce dernier, sur une des deux couches (22, 24) est fixée une bague-support d'écartement (40) métallique tournée vers l'autre couche, entourant l'orifice de passage de chambre de combustion (12), par soudure au laser, laquelle bague-support est recouverte par les deux couches (22, 24), et son épaisseur, mesurée perpendiculairement à la plaque d'étanchéité (10) n'est égale qu'à une fraction de l'épaisseur de chacune des deux couches (22, 24), **caractérisé en ce que** la bague-support d'écartement (40) est fixée de manière étanche au gaz sur la couche (24) qui la porte par un cordon de soudure laser (50) continu, annulaire, fermé sur lui-même et de forme régulière à l'exception d'une région de chevauchement dans laquelle le cordon de soudure est double.

2. Joint de culasse selon la revendication 1, **caractérisé en ce que** le cordon de soudure (50) a une structure telle qu'elle résulte d'un rayon laser dirigé le long de la bague-support d'écartement (40) sur le point de soudure.

3. Joint de culasse selon l'une ou l'autre des revendications 1 et 2, **caractérisé en ce que** l'épaisseur de la bague-support d'écartement (40) est d'environ 0,1 à 0,15 mm et celle de la deuxième couche est d'environ 0,6 à 1,1 mm, de préférence environ 0,85 à 1,05 mm.

4. Joint de culasse selon l'une ou plusieurs des revendications 1 à 3, **caractérisé en ce que** la bague-support d'écartement (40) forme un autre élément d'étanchéité directement adjacent à l'orifice de passage de chambre de combustion (12).

5. Joint de culasse selon l'une ou plusieurs des revendications précédentes, **caractérisé en ce qu'**il est prévu une autre couche de tôle métallique (20) extérieure, la deuxième couche (24) étant agencée entre celle-ci et la première couche (22), et **en ce que** la deuxième couche est coudée au voisinage radial de la bague-support d'écartement (40) d'une mesure qui est inférieure à l'épaisseur de la bague-support d'écartement, et **en ce que** l'autre couche extérieure (20) est également pourvue d'un élément d'étanchéité (26) correspondant à l'élément d'étanchéité (28) de la première couche (22).

6. Procédé de fixation de la bague-support d'écartement d'un joint de culasse selon l'une ou plusieurs des revendications 1 à 5, **caractérisé en ce qu'**un système optique focalisant un rayon laser d'un laser à onde continue sur l'interface entre la bague-support d'écartement (40) et la couche (24) qui la porte ainsi que la bague-support d'écartement avec cette couche sont déplacés l'un par rapport à l'autre le long d'un trajet correspondant à un cordon de soudure au laser à produire, de telle sorte que le long d'une première partie du trajet, il se produit une accélération à partir de l'arrêt jusqu'à une vitesse finale, **en ce qu'**une deuxième partie du trajet qui est un multiple de la première partie, est parcourue avec cette vitesse finale, et **en ce que** le long d'une troisième partie de ce trajet, qui coïncide au moins sensiblement avec la première partie, il se produit un ralentissement jusqu'à l'arrêt, la puissance du rayon laser restant à une puissance au moins sensiblement constante le long d'environ de la deuxième partie du trajet, augmentant à une puissance au moins sensiblement continue jusqu'à la puissance finale le long d'environ la première partie du trajet, et étant réduite de manière au moins sensiblement continue le long d'environ la troisième partie du trajet.

7. Procédé selon la revendication 6, **caractérisé en ce que** le rayonnement laser est orienté sur l'interface à travers la bague-support d'écartement (40).
